# FASCICULE DE BREVET EUROPEEN

(11) **EP 1 207 098 B1**
(45) Date de publication et mention de la délivrance du brevet: **01.10.2003**
(21) Numéro de dépôt: 00125174.3
(22) Date de dépôt: 18.11.2000
(51) Int. Cl.: B62D 51/00

(54) **Double châssis coulissant sur chenillette**
Verschiebbarer zweiteiliger Rahmen für ein kleines Raupenfahrzeug
Sliding double frame for a small tracked vehicle

(43) Date de publication de la demande: 22.05.2002
(73) Titulaire: Avidor SA, 1029 Villars-Ste-Croix (CH)
(72) Inventeur: Ducret, Jean-Luc, 1801 Le Mont-Pélerin (CH)
(74) Mandataire: Intès, Didier Gérard André

(56) Documents cités:
- CH-A- 247 146
- DE-U- 29 807 626
- FR-A- 2 450 191
- FR-A- 2 688 184
- US-A- 4 062 418

## Description

L'invention concerne un système à double châssis qui équipe une chenillette et dont le châssis supérieur est mobile.

Les chenillettes sont de petits engins à chenilles, utilisés pour le transport des choses. Elles servent aussi de base, pour l'adaptation de diverses machines utilisées lors de travaux spécifiques dans certains corps de métier tels que : viticulture, génie civil, entretien de jardin, agriculture, etc.

Les chenillettes sont souvent exploitées dans des conditions de terrains dont l'état et la topographie varient fortement.

FR 2 688 184 décrit une chenillette comportant un châssis inférieur surmonté de deux bras verticaux portant un axe de suspension d'une embase à balancier sur laquelle est fixé un moteur thermique, ce dispositif assurant le maintien à l'horizontale du bloc moteur et sa lubrification quelle que soit la déclivité du terrain. Le centre de gravité du moteur se déplace vers l'arrière lorsque la chenillette grimpe, et vers l'avant lorsque la chenillette descend.

DE 298 07 626 U décrit une chenillette dont la partie porte charge pivote sur le châssis inférieur pour s'adapter à la pente.

L'invention a pour but de fournir une chenillette utilisable dans des terrains en pente et d'assurer une répartition des masses idéales pour une meilleure stabilité de travail.

Ce but est atteint selon l'invention par une chenillette conforme à la revendication 1.
La figure 1 montre la configuration de la chenillette selon l'invention dans une montée ;
La figure 2 montre la chenillette dans une descente.

La présente invention concerne une solution technique au niveau du châssis de la chenillette qui est composé de deux parties. L'une inférieure 1 comprenant le train de chenilles 2, l'autre supérieure 3 dite d'exploitation comprenant moteur, pompes hydrostatiques, réservoir d'huile, filtre, guidon, etc. suivant les caractéristiques de la chenillette.

Le châssis inférieur 1, par définition, repose sur le sol. Le châssis supérieur 3 peut être déplacé sur l'avant ou l'arrière de la chenillette par rapport au châssis inférieur 1. De plus, les pièces qui gèrent la position du châssis supérieur 3 lors du mouvement de celui-ci, permettent d'abaisser le devant dudit châssis, lorsque celui-ci est déplacé à l'avant. A l'inverse, lorsque ce châssis supérieur 3 est positionné sur l'arrière, la partie postérieure de ce dit châssis s'abaisse.

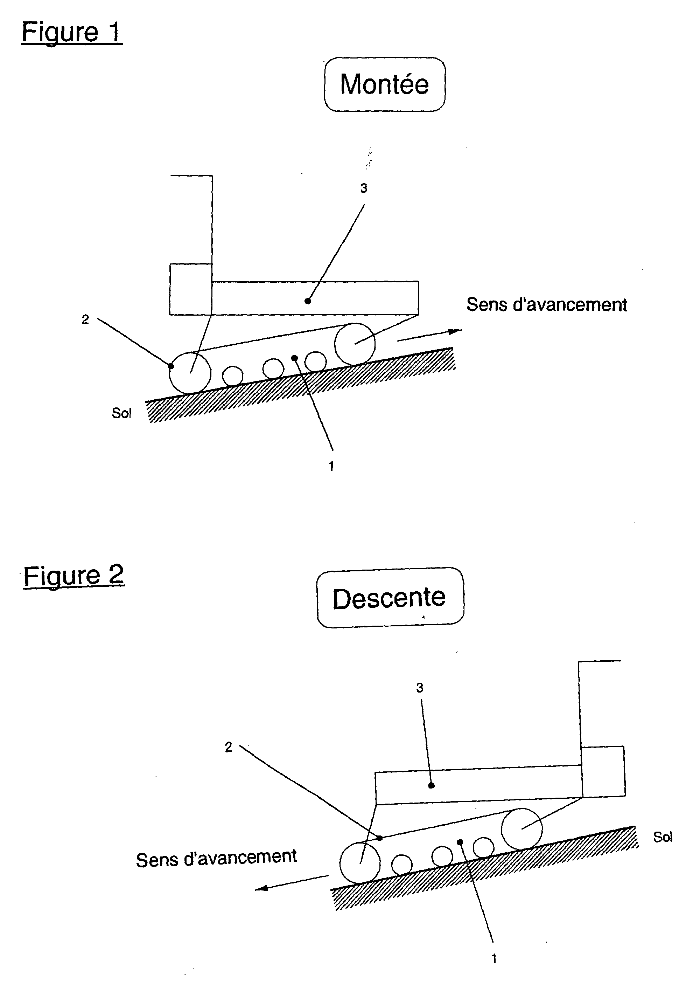

Dans la pratique, lorsque l'on aborde une montée, le châssis supérieur 3 sera déplacé sur l'avant (Fig. 1). Le centre de gravité de la machine sera ainsi reporté sur l'avant de celle-ci. Lors d'une utilisation à la descente, le châssis supérieur 3 sera déplacé sur l'arrière (Fig. 2) entraînant ainsi le report du centre de gravité sur l'arrière de la machine.

## Revendications

1. Chenillette comprenant un châssis inférieur (1) équipé de train de chenilles (2) et un châssis supérieur (3) supportant la partie dite d'exploitation de la machine, ledit châssis supérieur étant monté mobile par rapport au châssis inférieur, et pouvant être déplacé vers l'avant ou vers l'arrière,
**caractérisé par le fait que** les pièces qui gèrent la position du châssis supérieur (3) lors du mouvement de celui-ci permettent d'abaisser le devant dudit châssis supérieur (3), lorsque celui-ci est déplacé à l'avant, et d'abaisser la partie postérieure dudit châssis supérieur (3), lorsque celui-ci est positionné sur l'arrière.

## Patentansprüche

1. Kettenfahrzeug, das einen unteren Rahmen (1) aufweist, der mit einem Kettenfahrwerk versehen ist, und einen oberen Rahmen (3), der den sogenannten Nutzteil der Maschine trägt, wobei der obere Rahmen im Verhältnis zum unteren Rahmen beweglich montiert ist und nach vorne oder nach hinten versetzt werden kann,
**dadurch gekennzeichnet, dass** die Teile, die die Position des oberen Rahmens (3) bei der Bewegung desselben bewerkstelligen, es ermöglichen, das vordere Teil des oberen Rahmens (3) zu senken, wenn dieser nach vorne bewegt wird, und den hinteren Teil des oberen Rahmens (3) zu senken, wenn dieses auf dem hinteren Teil positioniert ist.

## Claims

1. Small tracked vehicle comprising a lower chassis (1) equipped with a trackset (2) and an upper chassis (3) supporting the so-called operating part of the machine, the said upper chassis being mounted so that it can move with respect to the lower chassis, and able to be moved forwards or backwards, **characterized in that** the parts that govern the position of the upper chassis (3) during the movement of the latter allow the front of the said upper chassis (3) to be lowered when this chassis is moved forwards and allow the rear part of the said upper chassis (3) to be lowered when this chassis is positioned at the rear.
